# EUROPEAN PATENT SPECIFICATION

(11) **EP 3 098 535 B1**
(45) Date of publication and mention of the grant of the patent: **01.08.2018**
(21) Application number: 14876312.1
(22) Date of filing: 25.12.2014
(51) Int. Cl.: F24H 9/00, F24H 1/18, B01D 19/00

(54) **BUBBLE REMOVER**
BLASENENTFERNER
DISPOSITIF D'ÉLIMINATION DES BULLES

(30) Priority: 31.12.2013 JP 2013273749
(43) Date of publication of application: 30.11.2016
(73) Proprietor: Yamaguchi Doken Kogyo Co., Ltd., Sorachi-gun, Hokkaido 079-0300 (JP)
(72) Inventor: KASAMATSU, Morio, Sapporo-shi Hokkaido 005-0006 (JP)
(74) Representative: Intès, Didier Gérard André
(86) International application number: PCT/JP2014/084757
(87) International publication number: WO 2015/102105

(56) References cited:
- DE-U- 1 969 259
- GB-A- 2 000 688
- JP-A- H10 244 101
- JP-A- 2000 249 403
- JP-A- 2009 270 766
- JP-A- 2010 249 418
- JP-U- 3 123 180
- JP-U- 3 141 319
- US-A- 2 983 331
- US-A- 5 066 467

## Description

### TECHNICAL FIELD

The present invention relates to a bubble remover for efficiently removing bubbles generated in hot water stored in a hot-water reservoir (hot-water tank) disposed in various places such as hotels, hospitals, factories, warm-bathing facilities, elder-care facilities, and other similar facilities using a large amount of hot water.

### BACKGROUND ART

Heating apparatuses, water heaters, etc. using hot water as a medium require a hot water tank for storing hot water used as a heat source. Examples of an apparatus stably and efficiently supplying hot water to a hot-water reservoir (hot-water tank) storing the hot water include a heat source water supply system (Japanese Laid-Open Patent Publication No. 2010-249418) previously proposed by the inventor of this application.

Hot water supplied from a hot-water feeder such as a boiler has dissolved oxygen (bubbles) generated in a heating process and mixed therein.

If bubbles are present in the hot water, the bubbles affect the heat transfer to the hot water, putting hot water into a patchy state in which a high-temperature water portion and a low-temperature water portion are mixed.

In particular, since the bubbles contain steam and therefore are at high temperature, hot water brought into contact with and heated by the bubbles forms the high-temperature water portion, while hot water passing through the bubbles without contact forms the low-temperature water portion, generating a temperature difference therebetween. This is a patchy phenomenon of hot water temperature, and the hot water tank described above has a problem of occurrence of the phenomenon.

A background art of the invention may include the following prior art document.

Patent Document 1: Japanese Laid-Open Patent Publication No. 10-244101

If bubbles are present in a hot-water reservoir, the bubbles stick to each other to generate bubble pools (also referred to as "air pools") adversely affecting temperature stability of hot water at high temperature and, particularly in the case of heating using hot water as a medium, the bubbles significantly reduce a heating effect, causing a situation in which a desired heating effect cannot be attained.

The presence of bubbles causes the generation of rust and also consequently leads to problems such as occurrence of scale and electrostatic generation.

If it is attempted to forcibly ensure a desired heating temperature under such conditions, preset temperature of heating is set unnecessarily higher, accordingly causing a vicious circle in which the generation of new bubbles is further facilitated.

Such a heating operation to hot water results in wasteful consumption of heat resources, making it unable to achieve an object of energy saving, and also leads to a negative result, i.e., an increase in CO₂.

Bubble removers including that of Patent Document 1 are not directed to natural disappearance of bubbles in a state of allowing the bubbles to be absorbed into hot water in a hot-water reservoir, which is intended to achieve in the present invention, and have a problem that the effect of removing bubbles is not sufficiently provided.

In particular, since a conventional typical bubble removal system is a system physically isolating and discarding bubbles generated in a heating process from hot water together with steam used as a heat source during heating and a steam-water separator is a system changing a direction of flow of hot water (for a U-turn) to discharge steam and a portion of bubbles together to the outside, a problem of incomplete removal of bubbles still remains, resulting in adverse effects leading to the inability to ensure temperature stability of supplied hot water and the wasteful consumption of steam used as a heat resource.

It is an object of the present invention to provide a bubble remover solving all the problems described above by allowing bubbles present in hot water to be absorbed into hot water in a hot water reservoir and to naturally disappear.

### DISCLOSURE OF INVENTION

A bubble remover according to claim 1 of the present invention is a bubble remover having a hot-water introduction pipe for introducing hot water containing bubbles sent from a hot-water feeder via a discharge pressure adjusting apparatus to a hot-water reservoir, the hot-water introduction pipe being horizontally attached near a top side wall of the hot-water reservoir, wherein
the other side of the hot-water introduction pipe is vertically bent downward in the hot-water reservoir to form a first vertical main pipe, wherein a leading end of the first vertical main pipe extends to a vicinity of a bottom portion of the hot-water reservoir, wherein on a side of the first vertical main pipe, a second vertical main pipe is disposed in parallel, wherein a plurality of lead-in pipes is horizontally bridged between the first vertical main pipe and the second vertical main pipe at predetermined intervals, wherein a base end portion of each of the lead-in pipes is attached to and opened on a side wall of the first vertical main pipe while a leading end portion of the lead-in pipe extends to the inside of the second vertical main pipe such that a vicinity of the leading end portion is bent upward so as to be parallel to the second vertical main pipe and that a tip portion is formed into a nozzle body, wherein a lower end of the second vertical main pipe is formed into an opening, wherein the upper other side of the second vertical main pipe is horizontally bent near a top portion of the hot-water reservoir and formed into a horizontal extension pipe, wherein a first spiral drum is attached near the middle of the horizontal extension pipe, wherein the other side of the horizontal extension pipe is vertically bent toward the lower side of the hot-water reservoir to form a vertical extension pipe, wherein a second spiral drum is attached near the middle of the vertical extension pipe, wherein a final open end of the vertical extension pipe is located near the center of the hot-water reservoir in a vertical direction, wherein a hot-water suction pipe extends vertically at a longitudinal center line position of the hot-water reservoir, wherein a lower end opening of the hot-water suction pipe is located near the bottom of the hot-water reservoir, and wherein an upper end portion of the hot-water suction pipe extends to the inside of the horizontal extension pipe such that an upper end opening of the hot-water suction pipe is bent and disposed to face in a direction of a hot water flow in the horizontal extension pipe.

The bubble remover according to claim 2 is the bubble remover according to claim 1, wherein the discharge pressure adjusting apparatus includes a main hot-water circuit and a bypass hot-water circuit, and wherein the main hot-water circuit is disposed with a pressure switch and a line pump capable of adjusting a discharge pressure of hot water.

The bubble remover according to claim 3 is the bubble remover according to claim 1 or 2, wherein a temperature sensor is disposed on a side wall of the hot-water reservoir.

The bubble remover according to claim 4 is the bubble remover according to any one of claims 1 to 3, wherein a monitoring port disposed on the side wall of the hot-water reservoir.

### BRIEF DESCRIPTION OF DRAWINGS

Fig. 1 is a plane view of a bubble remover used in the present invention.
Fig. 2 is a cross-sectional view taken along a line A-A of Fig. 1.
Fig. 3 is a cross-sectional view taken along a line B-B of Fig. 1.

### EXPLANATIONS OF LETTERS OR NUMERALS

- 1: discharge pressure adjusting apparatus
- 2: hot-water introduction pipe
- 3: hot-water reservoir
- 4: first vertical main pipe
- 5: leading end of first vertical main pipe
- 6: valve
- 7: second vertical main pipe
- 8: lead-in pipe
- 9: base end portion of lead-in pipe
- 10: leading end of lead-in pipe
- 11: horizontal extension pipe
- 12: first spiral drum
- 13: vertical extension pipe
- 14: second spiral drum
- 15: final open end of the vertical extension pipe
- 16: hot-water suction pipe
- 17: lower end opening of hot-water suction pipe
- 18: upper end opening of hot-water suction pipe
- 19: inspection port of hot-water reservoir
- 20: safety valve mounting port of hot-water reservoir
- 21: main hot-water circuit
- 22: bypass hot-water circuit
- 23: pressure switch
- 24: line pump
- 25: temperature sensor
- 26: monitoring port
- 27: hot-water discharge pipe

### BEST MODE FOR CARRYING OUT THE INVENTION

Embodiments of a bubble remover of the present invention will now be described with reference to the drawings; however, the present invention is not limited to these embodiments.

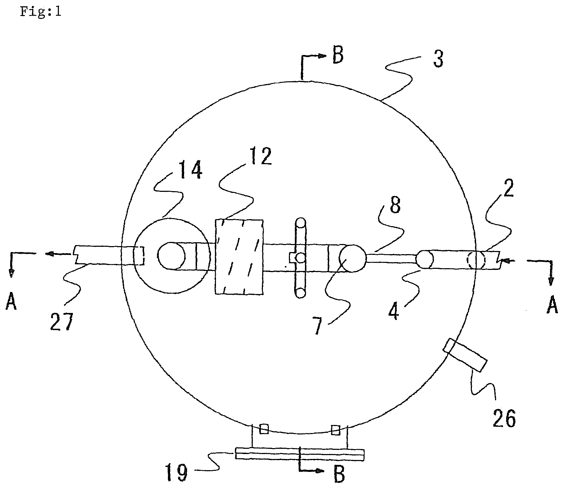

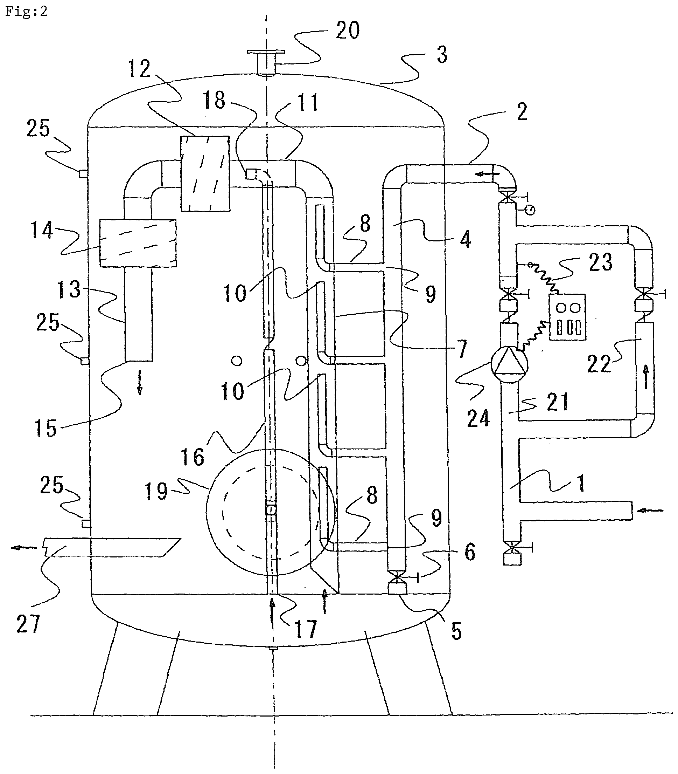

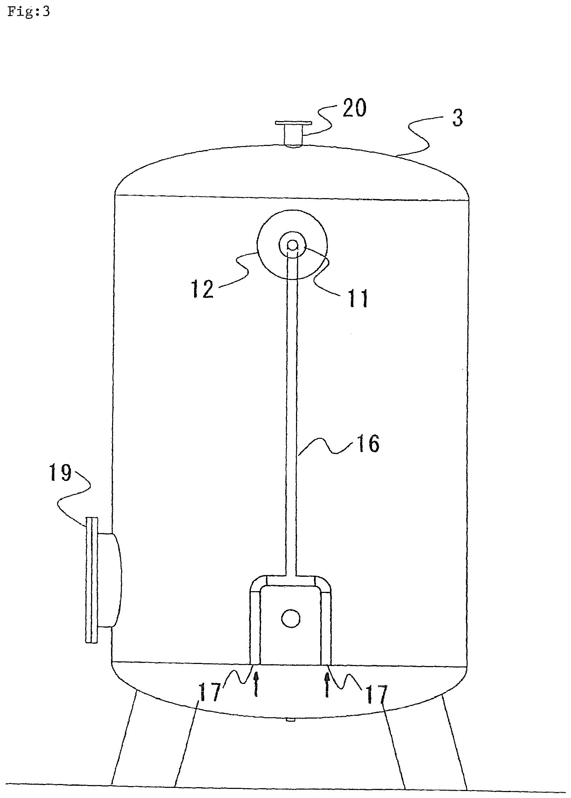

Fig. 1 is a plane view of a bubble remover used in the present invention. Fig. 2 is a cross-sectional view taken along a line A-A of Fig. 1. Fig. 3 is a cross-sectional view taken along a line B-B of Fig. 1.

As shown in the drawings of the bubble remover of Figs. 1 to 3, hot water is heated to a predetermined temperature (approximately 60 to 95 °C) by a hot-water feeder (not shown) made up of a steam boiler, a heat exchanger, etc., and is supplied via a discharge pressure adjusting apparatus 1 from a hot water introduction pipe 2 to a hot-water reservoir 3.

The hot water stored in the hot-water reservoir 3 is eventually sent to various places using a large amount of hot water, such as hotels, hospitals, factories, warm-bathing facilities, elder-care facilities, and other similar facilities.

Since bubbles (steam) are contained in hot water when the hot water described above is introduced into the hot-water reservoir 3, the bubbles must be removed.

The other side of the hot water introduction pipe 2 horizontally attached near a top side wall of the hot-water reservoir 3 is vertically bent downward in the hot-water reservoir 3 to form a first vertical main pipe 4. A lower end 5 of the first vertical main pipe 4 extends to a vicinity of a bottom portion of the hot-water reservoir 3. The lower end 5 of the first vertical main pipe 4 is closed by a valve 6 at normal time.

On a side of the first vertical main pipe 4, a second vertical main pipe 7 is disposed in parallel, and a plurality of (four in the drawings) lead-in pipes 8 is horizontally bridged between the first vertical main pipe 4 and the second vertical main pipe 7 at predetermined intervals.

A base end portion 9 of each of the lead-in pipes 8 is attached to and opened on a side wall of the first vertical main pipe 4 while a leading end portion 10 of each of the lead-in pipes 8 extends to the inside of the second vertical main pipe 7 such that the vicinity of the leading end portion 10 is bent upward so as to be parallel to the second vertical main pipe 7. Additionally, the leading end portion 10 is formed into a nozzle body.

A lower end of the second vertical main pipe 7 is formed into an opening, and the upper other side of the second vertical main pipe 7 is horizontally bent near a top portion of the hot-water reservoir 3 and is formed into a horizontal extension pipe 11.

A first spiral drum 12 is attached near the middle of the horizontal extension pipe 11.

The first spiral drum 12 is provided with a flow path allowing hot water to pass through spirally inside a cylindrical drum and is structurally characterized in that a relatively long flow path of the hot water can be ensured regardless of a short linear distance.

The other side of the horizontal extension pipe 11 is vertically bent toward the lower side of the hot-water reservoir 3 to form a vertical extension pipe 13, and a second spiral drum 14 is attached near the middle of the vertical extension pipe 13. The second spiral drum 14 has the same structure as the first spiral drum 12 described above.

A final open end 15 of the vertical extension pipe 13 is located near the center of the hot-water reservoir 3 in the vertical direction.

A hot-water suction pipe 16 extends vertically at a longitudinal center line position of the hot-water reservoir 3, and a lower end opening 17 of the hot-water suction pipe 16 is located near the bottom of the hot-water reservoir 3, while an upper end portion of the hot-water suction pipe 16 extends to the inside of the horizontal extension pipe 11 such that an upper end opening 18 of the hot-water suction pipe 16 is bent and disposed to face in the direction of a hot water flow in the horizontal extension pipe 11.

It is noted that the drawings include reference numeral 19 denoting an inspection port of the hot-water reservoir, reference numeral 20 denoting a safety valve mounting port of the hot-water reservoir, and reference numeral 27 denoting a hot water discharge pipe.

In the present invention according to the configuration, since hot water newly sent from the hot water introduction pipe 1 and hot water staying in the hot-water reservoir are efficiently stirred and mixed in the hot-water reservoir 3 such that steam in the newly introduced hot water having a relatively high temperature is mixed with the staying hot water having a relatively low temperature in the hot-water reservoir 3, and the mixed state is achieved over a long distance, the hot waters are equalized in temperature and mixed to a temperature allowing bubbles to disappear and the bubbles naturally disappear in an absorbed manner in the hot water, which was confirmed from experimental results.

Additionally, the discharge pressure adjusting apparatus 1 is made up of a main hot-water circuit 21 and a bypass hot-water circuit 22, and the main hot-water circuit 21 is disposed with a pressure switch 23 and a line pump 24 capable of adjusting a discharge pressure of hot water, so that the discharge pressure of the newly introduced hot water can suitably be controlled.

Moreover, the discharge pressure adjusting apparatus 1 is also characterized in that the appropriate number of temperature sensors 25 and a monitoring port 26 disposed on the side wall of the hot-water reservoir 3 enables fine temperature control of hot water in the hot-water reservoir and in that the inside of the hot-water reservoir 3 can be monitored through the monitoring port 26 so as to deal with occurrence of an abnormal situation.

### INDUSTRIAL APPLICABILITY

The present invention is usable in a field dealing with a hot-water reservoir disposed in various places such as hotels, hospitals, factories, warm-bathing facilities, elder-care facilities, and other similar facilities using a large amount of hot water.

As a result of employing the configuration described above, the bubble remover according to claim 1 of the present invention eliminates the need of physically isolating bubbles from within hot water, does not discard isolated bubbles together with hot water to the outside, and therefore provides excellent effects that are the absence of occurrence of a problem of incomplete removal of bubbles, the ability to ensure temperature stability of hot water, and the elimination of wasteful consumption of steam used as a heat resource.

Additionally, since the wasteful consumption of the heat resource is eliminated, the bubble remover also provides effects including the ability to achieve an object of energy saving and the ability to prevent an increase in CO₂.

Since the bubble remover according to claim 2 has a discharge pressure adjusting apparatus including a main hot-water circuit and a bypass hot-water circuit, and the main hot-water circuit is disposed with a pressure switch and a line pump capable of adjusting a discharge pressure of hot water, the bubble remover provides effects that are the ability to always ensure an optimum discharge pressure for the hot water containing bubbles introduced from the hot-water introduction pipe into the hot-water reservoir and the stabilization of the hot-water supply to the hot-water reservoir.

The bubble remover according to claim 3 has a temperature sensor disposed on a side wall of the hot-water reservoir and therefore provides an effect that is the ability to always keep the state of hot water in the hot-water reservoir to a suitable temperature state, and the bubble remover according to claim 4 has a monitoring port disposed on the side wall of the hot-water reservoir and therefore provides an effect that is the ability to always keep the state of hot water in the hot-water reservoir to a suitable temperature state.

## Claims

1. A bubble remover having a hot-water introduction pipe (2) for introducing hot water containing bubbles sent from a hot-water feeder via a discharge pressure adjusting apparatus (1) to a hot-water reservoir (3), the hot-water introduction pipe (2) being horizontally attached near a top side wall of the hot-water reservoir (3), wherein
the other side of the hot-water introduction pipe (2) is vertically bent downward in the hot-water reservoir (3) to form a first vertical main pipe (4), wherein a leading end of the first vertical main pipe (4) extends to a vicinity of a bottom portion of the hot-water reservoir (3), wherein on a side of the first vertical main pipe (4), a second vertical main pipe (7) is disposed in parallel, wherein a plurality of lead-in pipes (8) is horizontally bridged between the first vertical main pipe (4) and the second vertical main pipe (7) at predetermined intervals, wherein a base end portion of each of the lead-in pipes (8) is attached to and opened on a side wall of the first vertical main pipe (4) while a leading end portion (10) of the lead-in pipe (8) extends to the inside of the second vertical main pipe (7) such that a vicinity of the leading end portion (10) is bent upward so as to be parallel to the second vertical main pipe (7) and that a tip portion is formed into a nozzle body, wherein a lower end of the second vertical main pipe (7) is formed into an opening, wherein the upper other side of the second vertical main pipe (7) is horizontally bent near a top portion of the hot-water reservoir (3) and formed into a horizontal extension pipe (11) , wherein a first spiral drum (12) is attached near the middle of the horizontal extension pipe (11), wherein the other side of the horizontal extension pipe (11) is vertically bent toward the lower side of the hot-water reservoir (3) to form a vertical extension pipe (13), wherein a second spiral drum (14) is attached near the middle of the vertical extension pipe (13), wherein a final open end (15) of the vertical extension pipe (13) is located near the center of the hot-water reservoir (3) in a vertical direction, wherein a hot-water suction pipe (16) extends vertically at a longitudinal center line position of the hot-water reservoir (3) , wherein a lower end opening (17) of the hot-water suction pipe (16) is located near the bottom of the hot-water reservoir (3), and wherein an upper end portion of the hot-water suction pipe (16) extends to the inside of the horizontal extension pipe (11) such that an upper end opening (18) of the hot-water suction pipe (16) is bent and disposed to face in a direction of a hot water flow in the horizontal extension pipe (11).

2. The bubble remover according to claim 1, wherein the discharge pressure adjusting apparatus (1) includes a main hot-water circuit (21) and a bypass hot-water circuit (22), and wherein the main hot-water circuit (21) is disposed with a pressure switch (23) and a line pump (24) capable of adjusting a discharge pressure of hot water.

3. The bubble remover according to claim 1 or 2, wherein a temperature sensor (25) is disposed on a side wall of the hot-water reservoir (3).

4. The bubble remover according to any one of claims 1 to 3, wherein a monitoring port (26) disposed on the side wall of the hot-water reservoir (3).

## Patentansprüche

1. Blasenentferner mit einem Heißwassereinführrohr (2) zum Einführen von heißem Wasser, das Blasen enthält, das von einer Heißwasserzuführvorrichtung über eine Auslassdruckeinstellvorrichtung (1) zu einem Heißwassertank (3) geleitet wird, wobei das Heißwassereinführrohr (2) in der Nähe einer oberen Seitenwand des Heißwassertanks (3) horizontal angebracht ist, wobei
die andere Seite des Heißwassereinführrohrs (2) in dem Heißwassertank (3) vertikal nach unten gebogen ist, um ein erstes vertikales Hauptrohr (4) zu bilden, wobei sich ein vorderes Ende des ersten vertikalen Hauptrohrs (4) bis in die Nähe eines unteren Abschnitts des Heißwassertanks (3) erstreckt, wobei auf einer Seite des ersten vertikalen Hauptrohrs (4) ein zweites vertikales Hauptrohr (7) parallel angeordnet ist, wobei mehrere Zuleitungsrohre (8) zwischen dem ersten vertikalen Hauptrohr (4) und dem zweiten vertikalen Hauptrohr (7) in vorbestimmten Abständen horizontale Brückenverbindungen bilden, wobei ein Basisendabschnitt jedes der Zuleitungsrohre (8) an einer Seitenwand des ersten vertikalen Hauptrohrs (4) befestigt und geöffnet ist, während sich ein vorderer Endabschnitt (10) des Zuleitungsrohrs (8) zur Innenseite des zweiten vertikalen Hauptrohrs (7) derart erstreckt, dass eine Umgebung des vorderen Endabschnitts (10) nach oben gebogen ist, um parallel zu dem zweiten vertikalen Hauptrohr (7) zu sein, und dass ein Spitzenabschnitt zu einen Düsenkörper ausgebildet ist, wobei ein unteres Ende des zweiten vertikalen Hauptrohrs (7) zu einer Öffnung ausgebildet ist, wobei die obere andere Seite des zweiten vertikalen Hauptrohrs (7) in der Nähe eines oberen Abschnitts des Heißwassertanks (3) horizontal gebogen und zu einem horizontalen Verlängerungsrohr (11) ausgebildet ist, wobei eine erste Spiraltrommel (12) in der Nähe der Mitte des horizontalen Verlängerungsrohrs (11) angebracht ist, wobei die andere Seite des horizontalen Verlängerungsrohrs (11) vertikal zu der unteren Seite des Heißwassertanks (3) gebogen ist, um ein vertikales Verlängerungsrohr (13) auszubilden, wobei eine zweite Spiraltrommel (14) in der Nähe der Mitte des vertikalen Verlängerungsrohrs (13) angebracht ist, wobei sich ein abschließendes offenes Ende (15) des vertikalen Verlängerungsrohrs (13) in der Nähe des Zentrums des Heißwassertanks (3) in einer vertikalen Richtung befindet, wobei sich ein Heißwassersaugrohr (16) vertikal in einer Längsmittellinienposition des Heißwassertanks (3) erstreckt, wobei sich eine untere Endöffnung (17) des Heißwassersaugrohrs (16) in der Nähe des Bodens des Heißwassertanks (3) befindet, und wobei sich ein oberer Endabschnitt des Heißwassersaugrohrs (16) zur Innenseite des horizontalen Verlängerungsrohrs (11) derart erstreckt, dass eine obere Endöffnung (18) des Heißwassersaugrohrs (16) gebogen und so angeordnet ist, dass sie gegenüber in einer Richtung eines Heißwasserstroms in dem horizontalen Verlängerungsrohr (11) liegt.

2. Blasenentferner nach Anspruch 1, wobei die Auslassdruckeinstellvorrichtung(1) einen Haupt-Heißwasserkreislauf (21) und einen Bypass-Heißwasserkreislauf (22) enthält, und wobei der Haupt-Heißwasserkreislauf (21) mit einem Druckschalter (23) und einer Leitungspumpe (24) versehen ist, die in der Lage sind, einen Heißwasser-Auslassdruck einzustellen.

3. Blasenentferner nach Anspruch 1 oder 2, wobei ein Temperatursensor (25) auf einer Seitenwand des Heißwassertanks (3) vorgesehen ist.

4. Blasenentferner nach einem der Ansprüche 1 bis 3, wobei ein Überwachungsport (26) an der Seitenwand des Heißwassertanks (3) vorgesehen ist.

## Revendications

1. Dispositif d'élimination de bulles ayant un tuyau d'introduction d'eau chaude (2) pour introduire de l'eau chaude contenant des bulles, envoyée par un dispositif d'alimentation en eau chaude, via un appareil d'ajustement de pression de décharge (1) jusqu'à un réservoir d'eau chaude (3), le tuyau d'introduction d'eau chaude (2) étant fixé horizontalement à proximité d'une paroi latérale supérieure du réservoir d'eau chaude (3), dans lequel :
l'autre côté du tuyau d'introduction d'eau chaude (2) est plié verticalement vers le bas dans le réservoir d'eau chaude (3) pour former un premier tuyau principal vertical (4), dans lequel une extrémité d'attaque du premier tuyau principal vertical (4) s'étend jusqu'à proximité d'une partie inférieure du réservoir d'eau chaude (3), dans lequel, sur un côté du premier tuyau principal vertical (4), un second tuyau principal vertical (7) est disposé en parallèle, dans lequel une pluralité de tuyaux d'amenée (8) fait horizontalement le pont entre le premier tuyau principal vertical (4) et le second tuyau principal vertical (7) à intervalles prédéterminés, dans lequel une partie d'extrémité de base de chacun des tuyaux d'amenée (8) est fixée à et ouverte sur une paroi latérale du premier tuyau principal vertical (4) alors qu'une partie d'extrémité d'attaque (10) du tuyau d'amenée (8) s'étend vers l'intérieur du second tuyau principal vertical (7) de sorte qu'une proximité de la partie d'extrémité d'attaque (10) est pliée vers le haut afin d'être parallèle au second tuyau principal vertical (7) et en ce qu'une partie de pointe est formée dans un corps de buse, dans lequel une extrémité inférieure du second tuyau principal vertical (7) est formée dans une ouverture, dans lequel l'autre côté supérieur du second tuyau principal vertical (7) est horizontalement plié à proximité d'une partie supérieure du réservoir d'eau chaude (3) et formé dans un tuyau d'extension horizontal (11), dans lequel un premier tambour en spirale (12) est fixé à proximité du centre du tuyau d'extension horizontal (11), dans lequel l'autre côté du tuyau d'extension horizontal (11) est verticalement plié vers le côté inférieur du réservoir d'eau chaude (3) pour former un tuyau d'extension vertical (13), dans lequel un second tambour en spirale (14) est fixé à proximité du centre du tuyau d'extension vertical (13), dans lequel une extrémité ouverte finale (15) du tuyau d'extension vertical (13) est positionnée à proximité du centre du réservoir d'eau chaude (3) dans une direction verticale, dans lequel un tuyau d'aspiration d'eau chaude (16) s'étend verticalement dans une position de ligne centrale longitudinale du réservoir d'eau chaude (3), dans lequel une ouverture d'extrémité inférieure (17) du tuyau d'aspiration d'eau chaude (16) est positionnée à proximité du fond du réservoir d'eau chaude (3), et dans lequel une partie d'extrémité supérieure du tuyau d'aspiration d'eau chaude (16) s'étend vers l'intérieur du tuyau d'extension horizontal (11) de sorte qu'une ouverture d'extrémité supérieure (18) du tuyau d'aspiration d'eau chaude (16) est pliée et disposée pour être orientée dans une direction d'un écoulement d'eau chaude dans le tuyau d'extension horizontal (11).

2. Dispositif d'élimination de bulles selon la revendication 1, dans lequel l'appareil d'ajustement de pression de décharge (1) comprend un circuit d'eau chaude principal (21) et un circuit d'eau chaude de dérivation (22), et dans lequel le circuit d'eau chaude principal (21) est disposé avec un commutateur de pression (23) et une pompe en ligne (24) capable d'ajuster une pression de décharge d'eau chaude.

3. Dispositif d'élimination de bulles selon la revendication 1 ou 2, dans lequel un capteur de température (25) est disposé sur une paroi latérale du réservoir d'eau chaude (3).

4. Dispositif d'élimination de bulles selon l'une quelconque des revendications 1 à 3, dans lequel un orifice de surveillance (26) est disposé sur la paroi latérale du réservoir d'eau chaude (3).
